# FASCICULE DE BREVET EUROPEEN

(11) **EP 2 181 873 B1**
(45) Date de publication et mention de la délivrance du brevet: **11.07.2012**
(21) Numéro de dépôt: 09174802.0
(22) Date de dépôt: 02.11.2009
(51) Int. Cl.: B60H 1/32, B60H 1/00

(54) **Système d'identification d'un composant d'un circuit de traitement thermique d'un flux d'air**
Luftströmungswärmeregulierungskreislaufelementkennzeichnungssystem
Identification system of a component of a heat treatment for an airflow

(30) Priorité: 04.11.2008 FR 0806145
(43) Date de publication de la demande: 05.05.2010
(73) Titulaire: Valeo Systèmes Thermiques, 78321 Le Mesnil St Denis (FR)
(72) Inventeur: Almori, Armelle, 78310, MAUREPAS (FR); Pierres, Philippe, 78990, ELANCOURT (FR); Vincent, Philippe, 28230, EPERNON (FR)
(74) Mandataire: Léveillé, Christophe

(56) Documents cités:
- EP-A- 1 502 642
- FR-A- 2 865 159
- US-B1- 6 722 152

## Description

La présente invention concerne un système d'identification d'un composant intégré à un boîtier de chauffage, de ventilation et de climatisation permettant un traitement thermique d'un flux d'air. En particulier, le composant peut faire partie d'un circuit de traitement thermique d'un flux d'air.

L'invention trouve une application particulièrement avantageuse dans le domaine des équipements de chauffage, de ventilation et de climatisation des véhicules automobiles.

Il convient de préciser qu'on entend ici par « traitement thermique d'un flux d'air » l'ensemble des fonctions de chauffage, de ventilation et de climatisation, prises séparément et de façon unitaire ou en combinaison les unes avec les autres

La plupart des véhicules automobiles sont généralement équipés d'un boîtier de chauffage, de ventilation et de climatisation permettant un traitement thermique d'un flux d'air.

Un boîtier de chauffage, de ventilation et de climatisation est constitué d'une enceinte en matière plastique dans laquelle sont disposés les divers composants d'un circuit de traitement thermique d'un flux d'air destiné à être distribué dans un habitacle d'un véhicule automobile.

Un tel boîtier est par exemple connu du document US 6722152 B1, qui est considéré comme l'art antérieur le plus proche.

Une turbine placée dans une entrée du boîtier de chauffage, de ventilation et de climatisation introduit dans le circuit de traitement thermique le flux d'air à traiter thermiquement provenant de l'extérieur du véhicule et/ou de l'habitacle. Le flux d'air est ensuite déshumidifié et refroidi au passage à travers un évaporateur relié, à l'extérieur du boîtier de chauffage, de ventilation et de climatisation, à une boucle thermodynamique de climatisation du véhicule dans lequel circule un fluide réfrigérant, notamment un fluide sur-critique, par exemple du dioxyde de carbone ou analogue, ou un fluide sous-critique, par exemple du R12 et R134A ou analogue.

La boucle thermodynamique de climatisation comprend en complément de l'évaporateur classiquement un compresseur, un condenseur ou refroidisseur de gaz et un organe de détente.

Le boîtier de chauffage, de ventilation et de climatisation comprend également un radiateur apte à réchauffer le flux d'air et faisant partie d'un circuit de refroidissement d'un moteur, en particulier un moteur thermique permettant la propulsion du véhicule.

Le flux d'air ayant traversé l'évaporateur est séparé en un premier flux dirigé vers le radiateur et un deuxième flux d'air dirigé vers une branche d'air contournant le radiateur. Les premier et deuxième flux d'air se rejoignent dans une chambre de mélange afin d'obtenir un flux d'air à température désirée propre à être diffusé dans l'habitacle.

La température du flux d'air distribué peut être ajustée en faisant varier des moyens de réglage, notamment des volets, modifiant la proportion des premier et deuxième flux d'air arrivant dans la chambre de mélange, ou en réglant la température du fluide d'échange thermique circulant dans le radiateur.

Le flux d'air sortant de la chambre de mélange est finalement canalisé à travers différents conduits distribuant le flux d'air principalement vers le pare-brise, la planche de bord et vers les pieds des passagers avant et arrière du véhicule.

Le boîtier de chauffage, de ventilation et de climatisation peut comprendre également, en amont ou en aval du pulseur, un filtre à air destiné à éliminer les pollens et autres particules, et éventuellement à désodoriser le flux d'air entrant dans le boîtier de chauffage, de ventilation et de climatisation.

Les divers composants du circuit de traitement thermique du flux d'air sont placés à l'intérieur du boîtier de chauffage, de ventilation et de climatisation dans des emplacements prédéfinis par des empreintes réalisées en tant que logement pour les composants.

Bien entendu, une même plateforme de véhicule est prévue pour recevoir un boîtier de chauffage, de ventilation et de climatisation défini, notamment en termes d'encombrement et de performances, indépendamment du type des composants qui y sont installés. Ainsi, par exemple, dans un boîtier de chauffage, de ventilation et de climatisation donné, peuvent être logés, dans une même empreinte, plusieurs types d'évaporateurs différant les uns des autres par leurs dimensions ou par la nature du fluide réfrigérant qu'ils utilisent.

La difficulté qui se présente alors est qu'une fois que le composant, l'évaporateur notamment, est placé dans le boîtier de chauffage, de ventilation et de climatisation, il n'est plus possible de l'identifier sauf à démonter le boîtier de chauffage, de ventilation et de climatisation, ce qui représente une opération très pénalisante à réaliser, principalement quand le boîtier de chauffage, de ventilation et de climatisation est installé dans le véhicule.

Or, certaines recommandations ou normes en vigueur exigent en particulier de pouvoir connaître le fluide utilisé dans les composants, notamment les composants fonctionnant avec du dioxyde de carbone. Actuellement, il ne peut être répondu à cette question qu'en démontant le boîtier de chauffage, de ventilation et de climatisation.

Un but de l'invention est de proposer un système d'identification d'un composant d'un circuit de traitement thermique d'un flux d'air, le composant étant disposé à l'intérieur d'un boîtier de chauffage, de ventilation et de climatisation d'un véhicule automobile, permettant d'identifier le composant depuis l'extérieur du boîtier de chauffage, de ventilation et de climatisation sans avoir à le démonter.

Ce but est atteint, conformément à l'invention, grâce à un système d'identification d'un composant d'un circuit de traitement thermique d'un flux d'air, le composant disposé à l'intérieur d'un boîtier de chauffage, de ventilation et de climatisation d'un véhicule automobile et raccordé à une boucle thermodynamique de climatisation de circulation d'un fluide réfrigérant à travers une interface de raccordement. Le système d'identification comprend une référence d'identification du composant et des moyens de lecture de la référence d'identification disposés à l'interface de raccordement.

Le plus souvent, l'interface de raccordement est placée au niveau d'une paroi de séparation d'un habitacle et d'un compartiment moteur du véhicule.

Dans une application particulière, le composant considéré est un évaporateur de la boucle thermodynamique de climatisation du véhicule, comprenant notamment un compresseur, un condenseur ou refroidisseur de gaz et un détendeur, ces éléments étant placés hors du boîtier de chauffage, de ventilation et de climatisation, généralement dans le compartiment moteur du véhicule.

Selon un premier mode de réalisation de l'invention, les moyens de lecture comprennent une plaque de connexion portant la référence d'identification, la plaque de connexion étant destinée au raccordement du composant à la boucle thermodynamique de climatisation de circulation du fluide réfrigérant.

Selon un deuxième mode de réalisation de l'invention, les moyens de lecture comprennent une ouverture de lecture ménagée à l'interface de raccordement, le système d'identification comprenant en outre des moyens d'obturation de l'ouverture de lecture.

Plusieurs variantes de réalisation peuvent être envisagées pour les moyens d'obturation de l'ouverture de lecture. Ainsi, les moyens d'obturation comprennent un cache et/ou un obturateur respectivement disposé dans l'ouverture de lecture et/ou un capot recouvrant l'interface de raccordement.

La description qui va suivre en regard des dessins annexés, donnés à titre d'exemples non limitatifs, fera bien comprendre en quoi consiste l'invention et comment elle peut être réalisée. Notamment, les figures annexées représentent sur :
- la figure 1a, une vue d'un premier mode de réalisation d'un système d'identification selon la présente l'invention,
- la figure 1b, une vue en coupe selon l'axe X du système d'identification de la figure 1a.
- la figure 2a, est une vue d'une deuxième variante du premier mode de réalisation du système d'identification des figures 1a et 1b,
- la figure 2b, une vue en coupe selon l'axe X du système d'identification de la figure 2a,
- la figure 3a, une vue d'un deuxième mode de réalisation d'un système d'identification selon la présente,
- la figure 3b, une vue en coupe selon l'axe X du système d'identification de la figure 3a,
- la figure 4a, une vue d'une deuxième variante du deuxième mode de réalisation du système d'identification des figures 3a et 3b,
- la figure 4b, une vue en coupe selon l'axe X du système d'identification de la figure 4a,
- la figure 5a, une vue d'une troisième variante du deuxième mode de réalisation du système d'identification des figures 3a et 3b,
- la figure 5b, une vue en coupe selon l'axe X du système d'identification de la figure 5a,
- la figure 6a, une vue d'une quatrième variante du deuxième mode de réalisation du système d'identification des figures 3a et 3b, et
- la figure 6b, une vue en coupe selon l'axe X du système d'identification de la figure 6a.

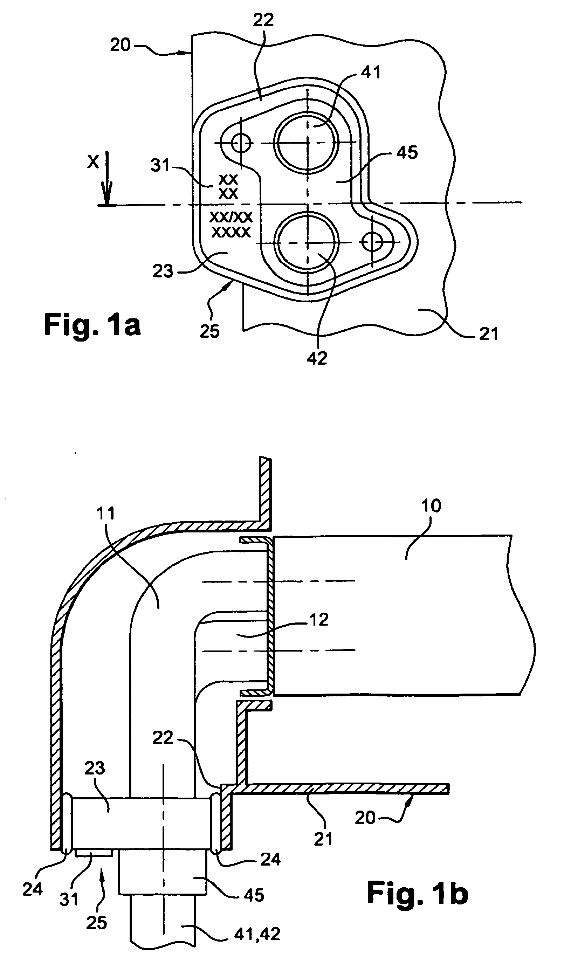

Les figures 1a et 1b présentent une première variante d'un premier mode de réalisation d'un système d'identification conforme à l'invention. Sur les figures 1a et 1b, est représenté un boîtier de chauffage, de ventilation et de climatisation 20 d'un véhicule automobile dans lequel est disposé un composant 10 intégré dans le boîtier de chauffage, de ventilation et de climatisation 20.

Le composant 10 est notamment un élément d'un circuit de traitement thermique d'un flux d'air. Dans un tel cas, le composant 10 peut en particulier être un évaporateur d'une boucle thermodynamique de climatisation du véhicule.

Bien entendu, d'autres composants peuvent être envisagés dans le cadre de l'invention, notamment le radiateur du circuit de traitement thermique du flux d'air intégré dans le boîtier de chauffage, de ventilation et de climatisation 20 et permettant le traitement thermique du flux d'air.

De manière à satisfaire des exigences normatives relatives imposant de pouvoir identifier certains organes ou composants depuis l'extérieur du boîtier de chauffage, de ventilation et de climatisation 20, en particulier le composant 10 tel que l'évaporateur, selon la présente invention, il est prévu un système d'identification qui va maintenant être décrit en détail.

Comme on peut le voir sur les figures 1a et 1b, le système d'identification comprend plusieurs éléments. Selon la présente invention, le système d'identification intègre au moins une référence d'identification 31 portant les indications utiles concernant le composant 10. En particulier, ces indications utiles sont la nature du fluide réfrigérant, la référence du composant, etc.

Selon le premier mode de réalisation, le système d'identification intègre au moins un moyen de lecture de la référence d'identification 31 disposés à l'interface de raccordement 25 du composant 10 avec la boucle thermodynamique de climatisation du véhicule dans lequel circule un fluide réfrigérant, notamment un fluide sur-critique, par exemple du dioxyde de carbone ou analogue, ou un fluide sous-critique, par exemple du R12 et R134A ou analogue.

A titre d'exemple, le composant 10 est un évaporateur intégré à la boucle thermodynamique de climatisation comprenant classiquement un compresseur, un condenseur ou refroidisseur de gaz et un organe de détente.

L'interface de raccordement 25 est agencé dans un orifice 22 pratiqué dans une paroi 21 du boîtier de chauffage, de ventilation et de climatisation 20 de manière à raccorder le composant 10 situé à l'intérieur du boîtier de chauffage, de ventilation et de climatisation 20 à la boucle thermodynamique de climatisation située à l'extérieur du boîtier de chauffage, de ventilation et de climatisation 20.

Dans le mode de réalisation des figures 1a et 1b, l'interface de raccordement 25 comporte une plaque de connexion 23 portant la référence d'identification 31. La plaque de connexion 23 est par ailleurs destinée au raccordement de tuyaux d'entrée 11 et de sortie 12 du composant 10 à deux tubulures 41 et 42 de la boucle thermodynamique de climatisation du véhicule. Les tuyaux d'entrée 11 et de sortie 12 du composant 10 sont reliées entre elles par la plaque de connexion 23.

De façon préférentielle, un joint d'étanchéité 24 est disposé entre la plaque de connexion 23 et l'orifice 22 pratiqué dans une paroi 21 du boîtier de chauffage, de ventilation et de climatisation 20 afin d'assurer l'étanchéité du boîtier de chauffage, de ventilation et de climatisation 20 par rapport au milieu extérieur.

Préférentiellement, les tubulures 41 et 42 de la boucle thermodynamique de climatisation du véhicule sont reliées entre elles par une bride de connexion 45. Ainsi, la connexion des tuyaux d'entrée 11 et de sortie 12 du composant 10 se fait en connectant entre elles la plaque de connexion 23 et la bride de connexion 45.

Selon le premier mode de réalisation, la référence d'identification 31 est portée par la plaque de connexion 23. La référence d'identification 31 est donc visible à travers l'orifice 22 de passage de l'interface de raccordement 25. Une telle lecture de la référence d'identification 31 peut donc être réalisée depuis l'extérieur du boîtier de chauffage, de ventilation et de climatisation 20, notamment depuis un compartiment moteur du véhicule, un espace dédiée à la maintenance, etc.

Dans la suite de la description, de nombreux éléments des figures précédentes sont repris dans les exemples suivants. En conséquence, sauf indication contraire, ces éléments seront identifiés par la même référence et ont les mêmes structures et caractéristiques.

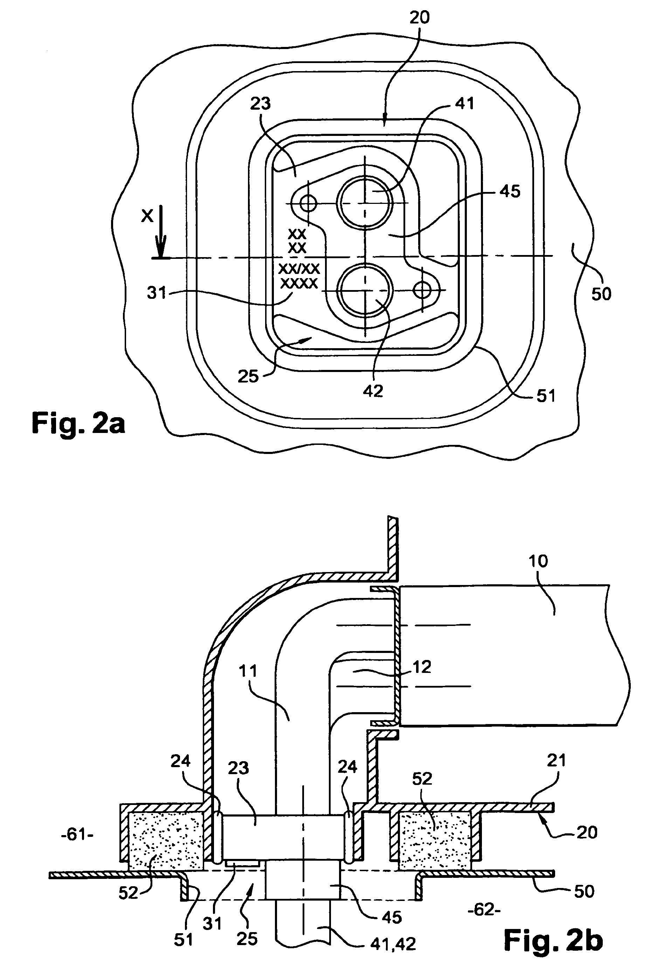

Les figures 2a et 2b présentent une deuxième variante du premier mode de réalisation du système d'identification conforme à l'invention. Les figures 2a et 2b illustrent une implantation dans le véhicule du boîtier de chauffage, de ventilation et de climatisation 20 portant le système d'identification du composant 10 des figures 1a et 1b.

Selon ce mode d'implémentation, l'interface de raccordement 25 est placée au niveau d'une paroi de séparation 50 séparant un habitacle 61 et un compartiment moteur 62 du véhicule. Comme on peut le voir sur la figure 2b, la paroi de séparation 50 présente un passage 51 située sensiblement en regard de l'interface de raccordement 25, afin de permettre le passage des tubulures 41 et 42 de la boucle thermodynamique de climatisation du véhicule.

Le boîtier de chauffage, de ventilation et de climatisation 20 est monté sur la paroi de séparation 50. Une garniture d'étanchéité 52 est disposée entre le boîtier de chauffage, de ventilation et de climatisation 20 et la paroi de séparation 50 afin d'assurer un montage étanche et isoler le boîtier de chauffage, de ventilation et de climatisation 20 et l'habitacle 61 du compartiment moteur 62.

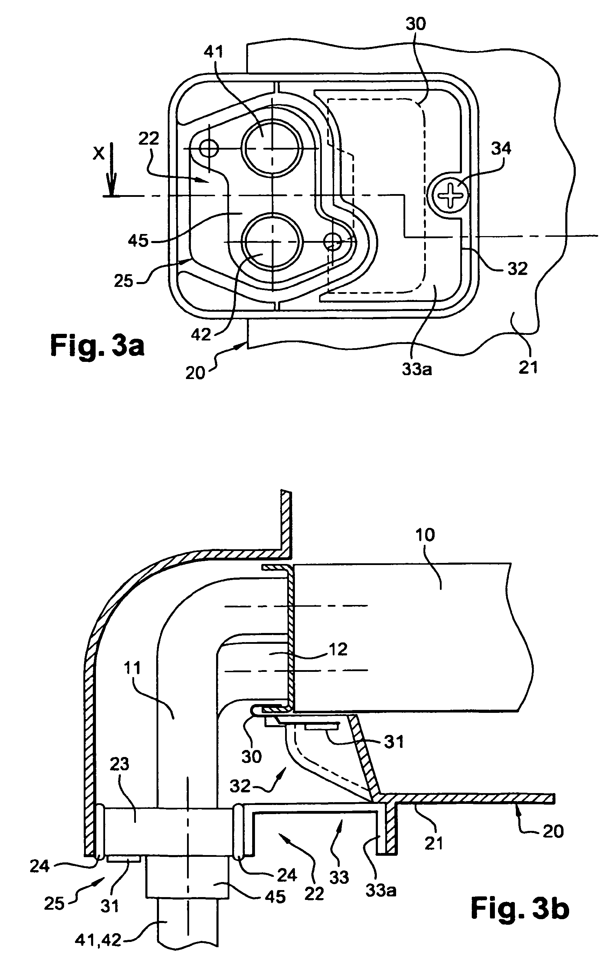

Les figures 3a et 3b présentent une première variante d'un deuxième mode de réalisation d'un système d'identification conforme à l'invention. Sur les figures 3a et 3b, est représenté un deuxième mode de réalisation du système d'identification du composant 10 comprenant des moyens de lecture de la référence d'identification 31 à travers une ouverture de lecture 32 ménagée dans l'interface de raccordement 25.

Selon cet exemple de réalisation, la référence d'identification 31 est portée par un support 30 placé sensiblement en regard de l'ouverture de lecture 32. Tout type de support 30 peut être envisagé, à savoir le composant 10 lui-même, comme les faces, les tubes, les brides de connexion, ou un élément rapporté ou non sur le composant, tel qu'une étiquette par exemple.

De manière à garantir une étanchéité du boîtier de chauffage, de ventilation et de climatisation 20 par rapport au compartiment moteur 62, il est prévu de clore l'ouverture de lecture 32 par un moyen d'obturation 33, en particulier un cache 33a. Ce cache 33a est maintenu en position d'obturation par une vis de fixation 34 qui peut être retirée afin de dégager le cache 33a pour lire la référence d'identification 31 à travers l'ouverture de lecture 32.

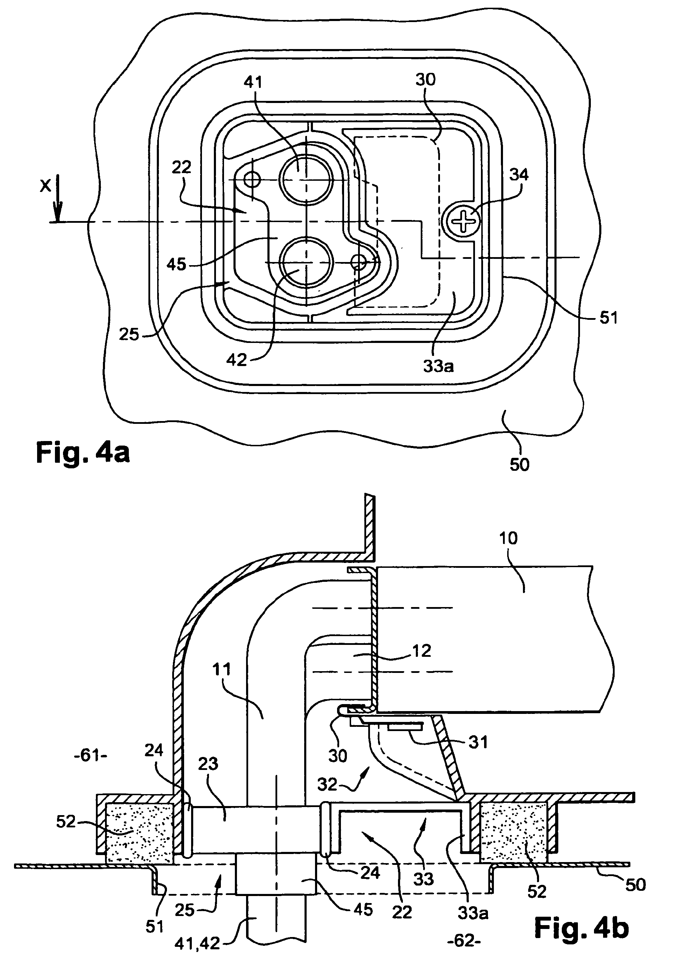

Les figures 4a et 4b présentent une deuxième variante du deuxième mode de réalisation du système d'identification conforme à l'invention. Les figures 4a et 4b montrent une implantation dans le véhicule du boîtier chauffage, de ventilation et de climatisation 20 équivalent à celui représenté sur les figures 2a et 2b en relation avec les figures 1a et 1 b.

Ainsi, l'interface de raccordement 25 est disposée à proximité immédiate de la paroi de séparation 50 entre l'habitacle 61 et le compartiment moteur 62 du véhicule.

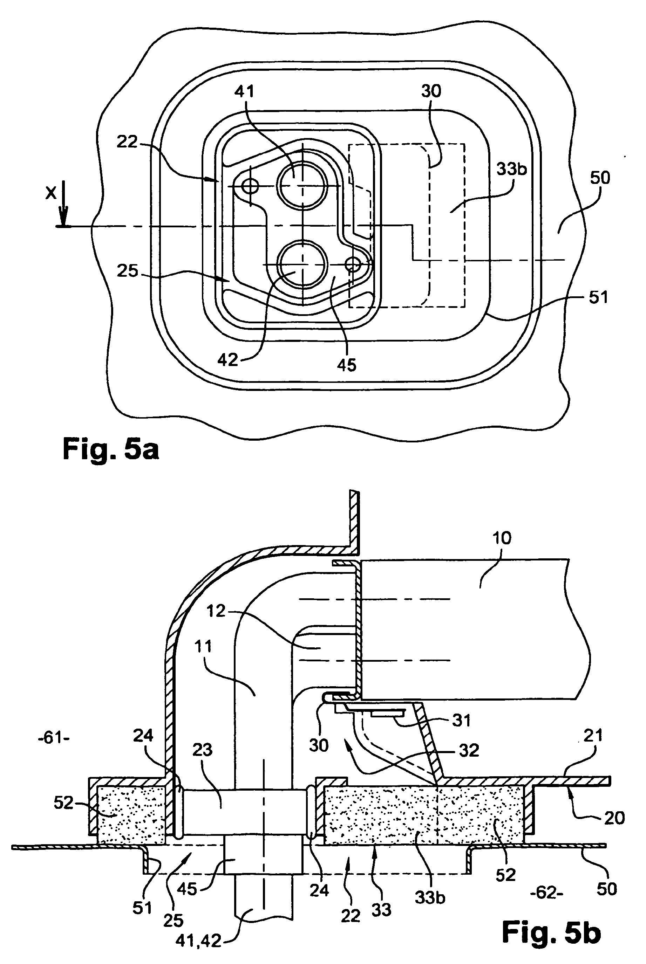

Les figures 5a et 5b présentent une troisième variante du deuxième mode de réalisation du système d'identification conforme à l'invention. Les figures 5a et 5b sont une variante de l'exemple de réalisation des figures 4a et 4b.

Selon cette alternative, le moyen d'obturation 33 de l'ouverture de lecture 32 est constitué par un obturateur 32b, formant de façon préférentielle, une extension de la garniture d'étanchéité 52.

De façon préférentielle, l'extension de la garniture d'étanchéité 52 est en matériau déformable, notamment de la mousse.

Afin de pouvoir lire la référence d'identification 31 à travers l'ouverture de lecture 32, l'obturateur 32b est déformée, par exemple avec le doigt ou un outil, de manière à dégager l'ouverture de lecture 32 pendant le temps nécessaire à la lecture de la référence d'identification 31. Lorsque l'action de déformation cesse, l'obturateur 32b revient dans sa positon d'origine assurant ainsi sa fonction d'obturation et d'étanchéité.

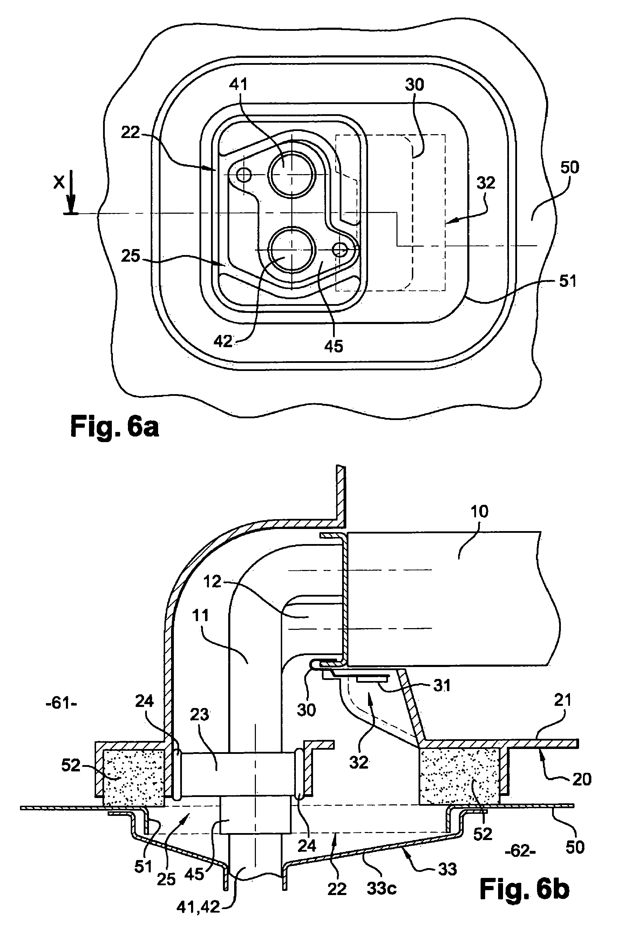

Les figures 6a et 6b présentent une quatrième variante du deuxième mode de réalisation du système d'identification conforme à l'invention. Les figures 6a et 6b constituent une autre alternative de l'exemple de réalisation des figures 4a et 4b.

Selon cette variante, le moyen d'obturation 33 de l'ouverture de lecture 32 comprend un capot 33c destiné à couvrir l'interface de raccordement 25. En pratique, le capot 33c peut être monté sur l'ouverture 51 de la paroi de séparation 50.

Selon des alternatives de réalisation non représentées, le capot 33c peut être monté sur d'autres formes du boîtier de chauffage, de ventilation et de climatisation 20.

Bien évidemment, l'invention n'est pas limitée aux modes de réalisation décrits précédemment et fournis uniquement à titre d'exemple et englobe d'autres variantes que pourra envisager l'homme du métier dans le cadre de la présente invention et notamment toutes combinaisons des différents modes de réalisation décrits précédemment.

## Revendications

1. Système d'identification d'un composant (10) d'un circuit de traitement thermique d'un flux d'air, le composant (10) étant disposé à l'intérieur d'un boîtier de chauffage, de ventilation et de climatisation (20) d'un véhicule automobile et raccordé à une boucle thermodynamique de climatisation de circulation d'un fluide réfrigérant à travers une interface de raccordement (25), **caractérisé en ce que** le système d'identification comprend :
- une référence d'identification (31) du composant (10) et
- des moyens de lecture (23, 32) de la référence d'identification (31), disposés à l'interface de raccordement (25).

2. Système d'identification selon la revendication 1, dans lequel les moyens de lecture comprennent une plaque de connexion (23) portant la référence d'identification (31), la plaque de connexion (23) étant destinée au raccordement du composant (10) à la boucle thermodynamique de climatisation de circulation du fluide réfrigérant.

3. Système d'identification selon la revendication 1 ou 2, dans lequel les moyens de lecture comprennent une ouverture de lecture (32) ménagée à l'interface de raccordement (25), le système d'identification comprenant en outre des moyens d'obturation (33, 33a, 33b, 33c) de l'ouverture de lecture (32).

4. Système d'identification selon la revendication 3, dans lequel les moyens d'obturation (33) comprennent un cache (33a) agencé dans l'ouverture de lecture (32).

5. Système d'identification selon la revendication 3 ou 4, dans lequel les moyens d'obturation (33) comprennent un obturateur (33b) en matériau déformable, notamment en mousse disposé dans l'ouverture de lecture (32).

6. Système d'identification selon l'une des revendications 3 à 5, dans lequel les moyens d'obturation (33) comprennent un capot (33c) recouvrant l'interface de raccordement (25).

7. Système d'identification selon l'une quelconque des revendications 1 à 6, dans lequel l'interface de raccordement (25) est placée au niveau d'une paroi de séparation (50) entre un habitacle (61) et un compartiment moteur (62) du véhicule.

8. Système d'identification selon l'une quelconque des revendications 1 à 7, dans lequel le composant (10) est un évaporateur de la boucle thermodynamique de climatisation de circulation d'un fluide réfrigérant.

9. Système d'identification selon l'une des revendications précédentes, dans lequel le fluide réfrigérant est le dioxyde de carbone.

## Claims

1. System for identifying a component (10) of an airflow heat treatment circuit, the component (10) being positioned inside a heating, ventilation and air-conditioning unit (20) of a motor vehicle and coupled to a thermodynamic air-conditioning loop for circulating a refrigerant through a coupling interface (25), **characterized in that** the identification system comprises:
- an identification reference (31) of the component (10) and
- means (23, 32) for reading the identification reference (31), positioned at the coupling interface (25).

2. Identification system according to Claim 1, in which the reading means comprise a connection plate (23) bearing the identification reference (31), the connection plate (23) being intended to couple the component (10) to the thermodynamic air-conditioning loop for circulating the refrigerant.

3. Identification system according to Claim 1 or 2, in which the reading means comprise a reading aperture (32) formed at the coupling interface (25), the identification system also comprising means (33, 33a, 33b, 33c) for shutting the reading aperture (32).

4. Identification system according to Claim 3, in which the shutting means (33) comprise a cover plate (33a) arranged in the reading aperture (32).

5. Identification system according to Claim 3 or 4, in which the shutting means (33) comprise a shutter (33b) made of deformable material, notably of foam positioned in the reading aperture (32).

6. Identification system according to one of Claims 3 to 5, in which the shutting means (33) comprise a cover (33c) covering the coupling interface (25).

7. Identification system according to any one of Claims 1 to 6, in which the coupling interface (25) is placed at a separating wall (50) between a passenger compartment (61) and an engine compartment (62) of the vehicle.

8. Identification system according to any one of Claims 1 to 7, in which the component (10) is an evaporator of the thermodynamic air-conditioning loop for circulating a refrigerant.

9. Identification system according to one of the preceding claims, in which the refrigerant is carbon dioxide.

## Patentansprüche

1. System zur Identifikation eines Bauteils (10) eines Wärmebehandlungskreislaufs eines Luftstroms, wobei das Bauteil (10) im Inneren eines Heiz-, Lüftungs- und Klimatisierungsgehäuses (20) eines Kraftfahrzeugs angeordnet und an einen thermodynamischen Klimatisierungskreislauf für die Zirkulation eines Kühlmittels durch eine Anschlussschnittstelle (25) hindurch angeschlossen ist, **dadurch gekennzeichnet, dass** das Identifikationssystem enthält:
- eine Identifikationsreferenz (31) des Bauteils (10), und
- Leseeinrichtungen (23, 32) der Identifikationsreferenz (31), die an der Anschlussschnittstelle (25) angeordnet sind.

2. Identifikationssystem nach Anspruch 1, bei dem die Leseeinrichtungen eine die Identifikationsreferenz (31) tragende Verbindungsplatte (23) enthalten, wobei die Verbindungsplatte (23) für den Anschluss des Bauteils (10) an den thermodynamischen Klimatisierungskreislauf für die Zirkulation des Kühlmittels bestimmt ist.

3. Identifikationssystem nach Anspruch 1 oder 2, bei dem die Leseeinrichtungen eine Leseöffnung (32) enthalten, die an der Anschlussschnittstelle (25) ausgespart ist, wobei das Identifikationssystem außerdem Verschlusseinrichtungen (33, 33a, 33b, 33c) der Leseeinrichtung (32) enthält.

4. Identifikationssystem nach Anspruch 3, bei dem die Verschlusseinrichtungen (33) eine Abdeckung (33a) enthalten, die in der Leseeinrichtung (32) ausgebildet ist.

5. Identifikationssystem nach Anspruch 3 oder 4, bei dem die Verschlusseinrichtungen (33) einen Verschluss (33b) aus verformbarem Material enthalten, insbesondere aus Schaumstoff, der in der Leseöffnung (32) angeordnet ist.

6. Identifikationssystem nach einem der Ansprüche 3 bis 5, bei dem die Verschlusseinrichtungen (33) einen Deckel (33c) enthalten, der die Anschlussschnittstelle (25) bedeckt.

7. Identifikationssystem nach einem der Ansprüche 1 bis 6, bei dem die Anschlussschnittstelle (25) im Bereich einer Trennwand (50) zwischen einem Innenraum (61) und einem Motorraum (62) des Fahrzeugs angeordnet ist.

8. Identifikationssystem nach einem der Ansprüche 1 bis 7, bei dem das Bauteil (10) ein Verdampfer des thermodynamischen Klimatisierungskreislaufs für die Zirkulation eines Kühlmittels ist.

9. Identifikationssystem nach einem der vorhergehenden Ansprüche, bei dem das Kühlmittel Kohlendioxid ist.
